(19) Europäisches Patentamt
European Patent Office
Office européen des brevets

(11) Numéro de publication : **0 426 530 B1**

# (12) FASCICULE DE BREVET EUROPEEN

(45) Date de publication du fascicule du brevet : **22.06.94 Bulletin 94/25**

(51) Int. Cl.$^5$ : **C08F 2/38,** C08F 220/24, C14C 9/00

(21) Numéro de dépôt : **90402991.5**

(22) Date de dépôt : **24.10.90**

## (54) Télomerès acryliques fluorés et leur application au traitement hydrofuge et oléofuge de substrats divers.

(30) Priorité : **02.11.89 FR 8914349**

(43) Date de publication de la demande : **08.05.91 Bulletin 91/19**

(45) Mention de la délivrance du brevet : **22.06.94 Bulletin 94/25**

(84) Etats contractants désignés : **AT BE CH DE DK ES FR GB GR IT LI LU NL SE**

(56) Documents cités :
**EP-A- 0 011 532**
**EP-A- 0 129 143**

(73) Titulaire : **ELF ATOCHEM S.A.**
**4 & 8, Cours Michelet**
**La Défense 10**
**F-92800 Puteaux (FR)**

(72) Inventeur : **Bonardi, Christian**
**17 Rue de Montbrillant**
**F-69003 Lyon (FR)**

(74) Mandataire : **Leboulenger, Jean et al**
**ATOCHEM**
**Département Propriété Industrielle**
**F-92091 Paris la Défense 10 Cédex 42 (FR)**

**EP 0 426 530 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne le domaine des produits fluorés destinés au traitement hydrofuge et oléofuge de substrats tels que textiles, tapis-moquettes, revêtements muraux, bois, matériaux de construction, métaux, matières plastiques, et a notamment pour objet des produits qui sont solubles dans des solvants pouvant être non halogénés et sont utilisables plus particulièrement pour la protection du cuir dont la finition et l'entretien doivent présenter les caractéristiques suivantes : souplesse, aspect et toucher agréables.

Comme produits plus spécialement adaptés au cuir, il a été proposé des produits solubles ou dispersables dans l'eau tels que, par exemple :

* des complexes de chrome d'acides carboxyliques fluorés (brevets US 2 934 450, 3 651 105, 3 907 576 et 3 574 518) qui confèrent effectivement de bonnes propriétés, mais présentent l'inconvénient d'être fortement colorés en vert et de communiquer cette couleur aux substrats sur lesquels ils sont appliqués, limitant ainsi leur emploi ;
* des acides carboxyliques fluorés (brevet US 3 382 097) et des acides polyfluoroalkylthio-dicarboxyliques (brevet US 3 471 518) ;
* des copolymères acryliques tels que ceux décrits dans le brevet FR 2 579 211, mais l'emploi de ces produits en milieu aqueux nécessite un temps de séchage très long ; de plus, pour certains cuirs et certains supports, l'eau peut être dommageable.

Ont également été proposés des polymères ou copolymères d'acrylates fluorés (brevet US 3 524 760). Cependant, ces produits synthétisés ou dilués, pour leur emploi, dans des solvants chlorés présentent un danger pour l'environnement.

Sont également connues des compositions comprenant des groupes perfluorés et des enchaînements uréthannes : voir par exemple les brevets US 3 468 924, 3 503 915, 3 528 849, 3 896 035, 3 896 251 et 4 024 178, FR 2 062 244, DE 1 620 965, CA 1 071 225, EP 103 752, CH 520 813 et 512 624. Malheureusement, ces produits ont l'inconvénient :

- soit de contenir des solvants chlorés,
- soit de faire appel pour la synthèse à des intermédiaires difficiles à préparer,
- soit de conférer des propriétés anti-taches qui restent relativement faibles,
- soit encore d'être présentés en émulsion aqueuse en raison de leur faible solubilité dans des solvants organiques.

Comme agents tensio-actifs on a proposé dans les brevets US 4 460 480, US 4 577 036 et FR 2 416 222 des télomères fluorés obtenus à partir d'un thiol fluoré et de composés éthyléniques. Ces produits généralement solubles dans l'eau ne confèrent aucune propriété hydrophobe et oléophobe.

Dans la demande de brevet EP 0 011 532 sont décrits des produits fluorés résultant de la réaction d'une molécule d'un ou plusieurs acides de formule $HS-A(COOH)_n$ où A représente un radical hydrocarboné aliphatique ou aromatique et n est un nombre entier allant de 1 à 4, avec une à cinq molécules d'un ou plusieurs composés possédant au moins une liaison éthylènique, l'un au moins de ces composés contenant une chaîne perfluorée. Ces produits, éventuellement neutralisés avec une base minérale ou organique, sont solubles dans l'eau et sont plus spécialement destinés au traitement oléofuge et hydrofuge des papiers et cartons.

La demande de brevet EP 0 129 143 décrit des polymères à groupe terminal fluoré obtenus par polymérisation radicalaire d'un monomère tel que le méthacrylate de méthyle, le styrène, le chlorure de vinyle, l'acrylonitrile, l'acrylamide, l'acide acrylique ou l'acétate de vinyle (exemples 1 à 15), en présence d'un thiol fluoré comme agent de transfert de chaîne.

Il a maintenant été trouvé, dans les services de la demanderesse, des télomères solubles dans les alcanes et particulièrement bien adaptés pour le traitement des cuirs auxquels ils confèrent de remarquables propriétés hydrophobes et oléophobes, sans en affecter le coloris, l'aspect, le toucher, la main, sans effet nuisible sur les vernis et ne présentant aucun risque majeur pour l'environnement.

Les produits selon l'invention sont des télomères qui contiennent en poids, sous forme télomérisée :

**(a)** 2 à 40 %, de préférence 10 à 30 %, d'un ou plusieurs thiols fluorés de formule générale :

$$R_F\text{-}B\text{-}SH \qquad (I)$$

dans laquelle $R_F$ représente un radical perfluoroalkyle à chaîne droite ou ramifiée, contenant de 2 à 20 atomes de carbone et B représente un radical alkylène contenant 1 à 4 atomes de carbone ;

**(b)** 20 à 70 %, de préférence 30 à 50 %, d'un ou plusieurs monomères polyfluorés de formule générale :

$$R_f-D-Q-\overset{\overset{\displaystyle O}{\|}}{C}-\underset{\underset{\displaystyle R}{|}}{C}=CH-R \qquad (II)$$

dans laquelle $R_f$ représente un radical perfluoroalkyle à chaîne droite ou ramifiée, contenant 2 à 20 atomes de carbone, Q représente un atome d'oxygène ou de soufre, D représente un enchaînement bivalent lié à Q par un carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ; et

**(c)** 0 à 65 %, de préférence 25 à 50 %, d'un ou plusieurs monomères quelconques autres que ceux définis sous (b).

Les radicaux perfluoroalkyle $R_F$ et $R_f$ peuvent être identiques ou différents et contiennent de préférence 4 à 16 atomes de carbone.

Parmi les thiols fluorés de formule (I), on préfère ceux dans lesquels B est un radical alkylène linéaire et, plus spécialement, un radical éthylène ou tétraméthylène. Ces thiols peuvent être préparés suivant des procédés connus, par exemple celui décrit dans le brevet FR 2 609 463.

Comme monomères polyfluorés de formule (II), on préfère ceux répondant à la formule :

$$R_f-(CH_2)_p-O-\overset{\overset{\displaystyle O}{\|}}{C}-\underset{\underset{\displaystyle R}{|}}{C}=CH-R \qquad (III)$$

dans laquelle $R_f$ et R ont les mêmes significations que ci-dessus, p représente un nombre entier allant de 1 à 20, de préférence égal à 2 ou 4. Ces monomères peuvent être préparés suivant des procédés connus, par exemple par estérification des alcools correspondants de formule :

$$R_f-(CH_2)_p-OH \qquad (IV)$$

au moyen d'un acide alcène-monocarboxylique de formule :

$$HOOC-\underset{\underset{\displaystyle R}{|}}{C}=CH-R \qquad (V)$$

tel que, par exemple, l'acide acrylique, l'acide méthacrylique et l'acide crotonique, en présence de catalyseurs acides comme l'acide sulfurique ou l'acide p-toluènesulfonique. Au lieu des acides alcène-monocarboxyliques de formule (V) on peut également utiliser leurs esters, anhydrides ou halogénures. Pour des raisons économiques et pratiques, il s'est avéré particulièrement intéressant d'utiliser un mélange de monomères de formule (III) présentant des radicaux $R_f$ différents.

Comme autres exemples de monomères polyfluorés de formule (II) on peut citer les esters des acides de formule (V) avec les alcools et les thiols de formules :

$$R_f-(CH_2)_p-SO_2-\underset{\underset{\displaystyle R'}{|}}{N}-(CXX')_q-\overset{\overset{\displaystyle Y}{|}}{\underset{\underset{\displaystyle Y'}{|}}{C}}-OH \qquad (VI)$$

$$R_f-(CH_2)_p-SH \qquad (VII)$$

$$R_f-(CH_2)_p-O-(CH_2)_r-OH \qquad (VIII)$$

$$R_f-(CH_2)_p-S-(CH_2)_r-OH \qquad (IX)$$

$$R_f-(CH_2)_p-(OCH_2CH_2)_r-OH \qquad (X)$$

$$R_f\text{-}(CH_2)_p\text{-}SO_2\text{-}(CH_2)_r\text{-}OH \qquad (XI)$$

$$R_f\text{-}CH = CH\text{-}(CH_2)_p\text{-}OH \qquad (XII)$$

$$R_f\text{-}SO_2\text{-}\underset{\displaystyle R''}{\underset{|}{N}}\text{-}(CH_2)_p\text{-}OH \qquad (XIII)$$

$$R_f\text{-}COO\text{-}(CH_2)_p\text{-}OH \qquad (XIV)$$

$$R_f\text{-}CO\text{-}\underset{\displaystyle R''}{\underset{|}{N}}\text{-}(CH_2)_p\text{-}OH \qquad (XV)$$

dans lesquelles Rf et p ont les mêmes significations que ci-dessus, R′ représente un atome d'hydrogène ou un radical alkyle contenant 1 à 10 atomes de carbone (de préférence méthyle), R″ représente un atome d'hydrogène ou un radical alkyle contenant 1 à 4 atomes de carbone, q est un nombre entier allant de 1 à 4 (de préférence 1 ou 2), r est un nombre entier allant de 1 à 20 (de préférence 1 à 4), X, X′, Y et Y′ sont identiques ou différents et représentent chacun un atome d'hydrogène ou un radical alkyle contenant 1 à 4 atomes de carbone.

Comme monomères (c) utilisables dans la présente invention, on préfère plus particulièrement les acrylates et méthacrylates d'alkyle à chaîne linéaire, ramifiée ou cyclique contenant de 1 à 18 atomes de carbone et de préférence au moins 6.

Comme autres monomères (c) pouvant aussi être utilisés dans le cadre de la présente invention, on peut citer :

- les hydrocarbures oléfiniques inférieurs, halogénés ou non, tels que l'éthylène, le propylène, l'isobutène, le chloro-3 isobutène-1, le butadiène, l'isoprène, les chloro- et dichloro-butadiènes, les fluoro- et difluoro-butadiènes, le diméthyl-2,5 hexadiène-1,5, le diisobutylène ;
- les halogénures de vinyle, d'allyle ou de vinylidène tels que le chlorure de vinyle ou de vinylidène, le fluorure de vinyle ou de vinylidène, le bromure d'allyle, le chlorure de méthallyle ;
- le styrène et ses dérivés, tels que le vinyl-toluène, l'α-méthyl-styrène, l'α-cyanométhyl-styrène, le divinyl-benzène, le N-vinyl carbazole ;
- les esters vinyliques tels que l'acétate de vinyle, le propionate de vinyle, les esters vinyliques des acides connus sur le marché sous le nom de "Versatic acids", l'isobutyrate de vinyle, le sénécionate de vinyle, le succinate de vinyle, l'isodécanoate de vinyle, le stéarate de vinyle, le carbonate de divinyle ;
- les esters d'allyle comme l'acétate d'allyle et l'heptanoate d'allyle ;
- les éthers alkyl-vinyliques ou alkyl-allyliques, halogénés ou non, tels que le cétyl vinyl éther, le dodécyl vinyl éther, le n.butyl vinyl éther, l'isobutyl vinyl éther, l'éthyl vinyl éther, l'éthyl-2 hexyl vinyl éther, le chloro-2 éthyl vinyl éther, le tétra allyloxy éthane ;
- les vinyl alkyl cétones comme le vinyl méthyl cétone ;
- les acides insaturés, tels que les acides acrylique, méthacrylique, α-chloro-acrylique, crotonique, maléïque, fumarique, itaconique, citraconique et sénécioïque, leurs anhydrides et leurs esters comme les acrylates et méthacrylates de vinyle, d'allyle, d'isocyanato-2 éthyle, le maléate de diméthyle, le crotonate d'éthyle, le maléate acide de méthyle, l'itaconate acide de butyle, les diacrylates et diméthacrylates de glycol ou de polyalkylène glycol, comme le diméthacrylate d'éthylène glycol ou de triéthylène glycol, les acrylates et méthacrylates de dichloro-phosphato alkyle comme le méthacrylate de dichloro-phosphato éthyle, ainsi que le phosphate acide de bis (méthacryloyloxy éthyle), le méthacryloyloxypropyltriméthoxy-silane et l'acrylate ou le méthacrylate d'hydroxy-2 chloro-3 propyle ;
- l'acrylonitrile, le méthacrylonitrile, le chloro-2 acrylonitrile, l'acrylate ou méthacrylate de cyano-2 éthyle, le méthylène glutaronitrile, le cyanure de vinylidène, les cyanoacrylates d'alkyle comme le cyanoacrylate d'isopropyle, la trisacryloyl hexahydro-s-triazine, le vinyl trichlorosilane, le vinyl triméthoxysilane, le vinyl triéthoxysilane, la N-vinyl-pyrrolidone-2.

Peuvent également être utilisés comme monomères (c), des composés possédant au moins une liaison éthylénique et au moins un groupe réactif, c'est-à-dire un groupe capable de réagir avec un autre monomère, un autre composé ou le substrat lui-même pour établir une réticulation. Ces groupes réactifs sont bien connus

et peuvent être des groupes polaires ou des groupes fonctionnels comme les groupes OH, $NH_2$, NH-alkyl, COOMe (Me = métal alcalin ou alcalino-terreux),

$$SO_3H,\ -\underset{\diagdown\ O\ \diagup}{CH-CH_2},\ CHO,\ \geq C-Cl,\ \geq C-Br,\ -SO_2-CH = CH_2,$$

$-NH-CO-CH = CH_2$. Comme monomères de ce type on peut citer les acrylates et méthacrylates hydroxyalkyliques comme le monoacrylate d'éthylène glycol, le monométhacrylate de propylène glycol, les acrylates et méthacrylates de polyalkylène glycols, l'alcool allylique, l'allyl glycolate, l'isobutènediol, l'allyloxy éthanol, l'o.allyl phénol, le divinyl carbinol, le glycérol $\alpha$-allyléther, l'acrylamide, le méthacrylamide, les maléamide et maléïmide, le N-(cyano-éthyl)acrylamide, le N-isopropyl-acrylamide, le diacétone-acrylamide, les N-(hydroxyméthyl) acrylamide et méthacrylamide, les N-(alcoxyméthyl) acrylamides et méthacrylamides, l'acrylamido-2 méthoxy-2 acétate de méthyle, le glyoxal bis-acrylamide, l'acrylate ou méthacrylate de sodium, les acides vinyl-sulfonique et styrène-p-sulfonique et leurs sels alcalins, l'amino-3 crotononitrile, la monoallyl amine, les vinyl-pyridines, l'acrylate ou méthacrylate de glycidyle, l'allyl glycidyl éther, l'acroléine, le méthacrylate de N,N-diméthylaminoéthyle ou de N-tertiobutylamino-éthyle.

Parmi les comonomères (c) précités, on préfère les suivants : acétate de vinyle, esters vinyliques des acides "Versatic", isobutyl vinyl éther, acide acrylique ou méthacrylique, anhydride maléique, diacrylate ou diméthacrylate d'éthylèneglycol ou de triéthylèneglycol, acrylonitrile, méthacrylonitrile, acrylate de cyano-2 éthyle, N-vinyl-pyrrolidone-2, monoacrylate ou méthacrylate d'éthylèneglycol ou de propylèneglycol, acrylamide, méthacrylamide, diacétone-acrylamide, N-méthylol-acrylamide ou méthacrylamide, isobutoxyméthyl-acrylamide ou méthacrylamide, acrylamido-2 méthoxy-2 acétate de méthyle,, acrylate ou méthacrylate de glycidyle, méthacrylate de N,N-diméthyl-aminoéthyle ou de N-tertiobutylaminoéthyle.

Les produits selon l'invention sont préparés de façon connue en soi par télomérisation en présence de solvant ou non. Le thiol défini sous (a) joue le rôle de télogène et les composés éthyléniques définis sous (b) et (c) jouent le rôle de taxogènes.

D'une façon générale, les réactions de télomérisation sont connues et décrites, par exemple, dans les références suivantes :

- "Monomeric Acrylic Esters" par H. RIDDLE, Reinhold Publishing Corp. (1965), pages 149 à 151 ;
- G. NAGY "L'industrie chimique" - n° 570 - Janv. 1965 - pages 1 à 6 ;
- R.B. FOX and DE FIELD, U.S. Naval Research Laboratory-Washington, NRL Report 5190 - 19 Nov. 1958 ;
- M.S. KARASCH and C.F. FOCUS - Jour. Org. chem. 13, 1948, pages 97 à 100 ;
- C.M. STARKS, "Free Radical Telomerization", Academic Press 1974 ;
- B. BOUTEVIN et Y. PIETRASANTA "Les acrylates et polyacrylates fluorés, dérivés et applications" - EREC. 1988.

La réaction peut être conduite de façon continue, discontinue ou graduelle, à une température qui peut aller de la température ambiante jusqu'au point d'ébullition du milieu réactionnel. On opère de préférence entre 50 et 90°C. La concentration totale des réactifs peut varier de 5 à 100 % en poids.

La télomérisation peut être réalisée dans des solvants cétoniques (par exemple l'acétone, la méthyl éthyl cétone, la méthyl isobutyl cétone), des alcools (par exemple l'isopropanol), des esters (par exemple l'acétate d'éthyle ou l'acétate de butyle), des éthers (par exemple le diisopropyl éther, l'éther éthylique ou méthylique de l'éthylène glycol, le tétrahydrofuranne, le dioxanne), des hydrocarbures aliphatiques ou aromatiques, des hydrocarbures halogénés (par exemple le perchloréthylène, le trichloro-1,1,1 éthane, le trichlorotrifluoroéthane), le diméthylformamide ou la N-méthyl-pyrrolidone-2. On peut utiliser un seul de ces solvants ou un mélange.

On effectue la télomérisation en présence d'initiateur(s) qu'on utilise à raison de 1 à 4 % par rapport au poids total des télogènes et taxogènes engagés. Comme initiateurs on peut utiliser des peroxydes tels que, par exemple, le peroxyde de benzoyle, le peroxyde de lauroyle, le peroxyde de succinyle et le perpivalate de tertiobutyle, ou des composés azoïques tels que, par exemple, l'azo-2,2′ bis-isobutyronitrile, l'acide azo-4,4′ bis-(cyano-4 pentanoïque) et l'azodi-carbonamide. On peut également opérer en présence de rayonnement U.V. et de photo-initiateurs tels que la benzophénone, la méthyl-2 anthraquinone ou la chloro-2 thioxanthone.

La solution de télomère obtenue peut éventuellement être diluée avec le solvant de télomérisation ou, sous réserve de miscibilité réciproque, avec un autre solvant ou un mélange de solvants. Si on le désire, on peut également isoler le télomère par élimination du ou des solvants.

Comme substrats susceptibles d'être rendus oléophobes et hydrophobes avec les produits selon l'invention, on peut citer principalement les cuirs. On peut mentionner également d'autres matériaux très divers tels que, par exemple, les papiers, les articles tissés ou non tissés à base de cellulose ou de cellulose régénérée, de fibres naturelles, artificielles ou synthétiques comme le coton, l'acétate de cellulose, la laine, la soie, les fibres de polyamide, polyester, polyoléfine, polyuréthane ou polyacrylonitrile, les matières plastiques, le verre, le bois, les métaux, la porcelaine, la maçonnerie, les surfaces peintes.

Dans le cas des cuirs, les solutions de télomères selon l'invention sont appliquées principalement en milieu alcoolique, en milieu hydrocarbure aliphatique ou dans un mélange d'hydrocarbure aliphatique et d'alcool, suivant des techniques bien connues, par exemple par pulvérisation ou encore par enduction à la brosse.

Les supports traités avec les télomères selon l'invention présentent de bonnes propriétés oléophobes et hydrophobes après un simple séchage à température ambiante ou à une température plus élevée qui varie avec le type de support, mais peut aller jusqu'à 250°C. Les cuirs sont préférentiellement séchés à la température ambiante ou à une température modérée allant jusqu'à environ 60°C.

Pour obtenir un effet particulier ou une meilleure fixation, il peut être parfois avantageux sur certains supports d'associer les télomères selon l'invention à certains adjuvants, polymères, produits thermocondensables, catalyseurs, anti UV, fongicides, agents antistatiques, etc...

La quantité de télomère à mettre en oeuvre varie avec la nature du support à traiter et avec la teneur en fluor du télomère. Sur cuir, cette quantité est généralement comprise entre 0,2 et 5 g par $m^2$, de préférence entre 0,5 et 2,5 g/$m^2$. Ainsi traités, tous les types de cuirs, tannés avec des sels de chrome ou des tannins végétaux, présentent de bonnes propriétés hydrophobes et oléophobes.

Pour évaluer les performances des substrats traités selon l'invention, la demanderesse a utilisé les tests suivants :

**Test de résistance à l'eau (RE)**

Le test consiste à mesurer le temps de pénétration d'une goutte d'eau déposée sur le substrat. Si le temps de pénétration excède deux heures, cette résistance est jugée excellente.

**Test de résistance à l'huile (RH)**

Le test consiste à mesurer le temps de pénétration d'une goutte d'huile de vaseline déposée sur le substrat. Si le temps de pénétration excède deux heures, cette résistance est jugée excellente. Le test est volontairement arrêté après 9 heures ; on considère que ce laps de temps offre les valeurs maximales de résistance à l'huile.

**Test d'hydrophobie (H)**

Sur certains supports, l'effet hydrophobe a été mesuré à l'aide de solutions-test numérotées de 1 à 10 et constituées par des mélanges eau/isopropanol dans les proportions pondérales suivantes :

| Solution-test | Eau | Isopropanol |
|---|---|---|
| 1 | 90 | 10 |
| 2 | 80 | 20 |
| 3 | 70 | 30 |
| 4 | 60 | 40 |
| 5 | 50 | 50 |
| 6 | 40 | 60 |
| 7 | 30 | 70 |
| 8 | 20 | 80 |
| 9 | 10 | 90 |
| 10 | 0 | 100 |

Le test consiste à déposer sur les substrats traités des gouttes de ces mélanges, puis à observer l'effet produit. On cote en donnant pour valeur, le numéro correspondant à la solution qui contient le plus fort pourcentage d'isopropanol et qui n'a pas pénétré ou mouillé le substrat après 30 secondes de contact.

Le pouvoir répulsif des supports traités, vis-à-vis des huiles (OR) et de l'eau (ST) a été mesuré suivant les normes AATCC 118-1975 (Oil Repellency : hydrocarbon resistance test) et AATCC 22-1975 (Water repellency : Spray-test). Sur cuir, le pouvoir répulsif vis-à-vis de l'eau (spray-test) a été déterminé de la façon suivante : après que la totalité de l'eau ait coulé sur la surface du cuir, on pose ce dernier à plat et on le recouvre d'une feuille de papier buvard ; on exerce alors sur l'ensemble une pression en faisant effectuer un aller et retour à un rouleau métallique d'un poids de 2 kg. On cote ensuite en fonction des taches formées par l'eau qui mouille le cuir et suivant les valeurs indiquées dans le tableau d'évaluation de la norme AATCC 22-1975. Sur textile, par contre, les mesures ont été rigoureusement effectuées suivant la norme.

Les exemples suivants dans lesquels, sauf mention contraire, les parties et les pourcentages s'entendent en poids, illustrent l'invention sans la limiter.

## EXEMPLE 1

**a) Préparation** :

Dans un réacteur d'une capacité de 500 parties en volume, équipé d'un agitateur, d'un thermomètre, d'un réfrigérant à reflux, d'une ampoule de coulée, d'une arrivée d'azote et d'un dispositif de chauffage, on charge 41,25 parties de n-heptane, 13,9 parties d'acétate d'éthyle, 2,5 parties de thiol $C_8F_{17}C_2H_4SH$ et 5,6 parties d'un mélange de monomères polyfluorés de formule générale :

$$CF_3-(CF_2)_n-C_2H_4-O-\underset{\underset{O}{\|}}{C}-\underset{\underset{CH_3}{|}}{C}=CH_2 \qquad (XVI)$$

ayant la composition suivante :

| | | | | | | |
|---|---|---|---|---|---|---|
| n : | 5 | 7 | 9 | 11 | 13 | 15 |
| % : | 1 | 58 | 24 | 12 | 3 | 2 |

puis 10,5 parties de méthacrylate de stéaryle technique (mélange contenant environ 70 % d'ester en $C_{18}$ et 30 % d'ester en $C_{16}$), 1,37 partie de monométhacrylate d'éthylène glycol et 0,75 partie de méthacrylate de

glycidyle.

On chasse l'air du réacteur par un courant d'azote anhydre, porte la solution à reflux (soit 77°C), ajoute 0,2 partie de peroxyde de lauroyle et 0,06 partie de perpivalate de tertiobutyle, puis on coule goutte à goutte en une heure, une solution de 13,75 parties de n-heptane, 4,6 parties d'acétate d'éthyle, 7,5 parties de thiol $C_8F_{17}C_2H_4SH$, 16,75 parties du mélange de monomères polyfluorés décrit précédemment, 3,36 parties de méthacrylate de stéaryle technique, 4,1 parties de méthacrylate d'éthylène glycol et 2,25 parties de méthacrylate de glycidyle.

On maintient ensuite au reflux pendant 6 heures en ajoutant toutes les 30 minutes 0,06 partie de perpivalate de tertiobutyle et toutes les 150 minutes 0,1 partie de peroxyde de lauroyle. A la fin de ce temps, l'analyse chromatographique (CPV) montre la disparition totale du thiol et des monomères. Après refroidissement à température ambiante, on obtient une solution jaune limpide d'un télomère selon l'invention. Par étuvage de cette solution pendant 2 heures à 120°C, on détermine son taux de matière non volatile, puis on l'ajuste à 25 % par addition d'un mélange 75/25 de n-heptane et d'acétate d'éthyle. On obtient alors une solution limpide jaune clair (S1) dont le taux de fluor est de 9,5 %.

**b) Applications** :

2 parties de cette solution S1 sont diluées jusqu'à 100 parties avec un mélange 85/15 de n-heptane et d'isopropanol. La nouvelle solution ainsi obtenue est ensuite appliquée par pulvérisation sur un cuir de veau tanné au chrome, à raison de 200 g/m$^2$ et on laisse sécher pendant 8 heures à la température ambiante avant de procéder à l'examen des performances obtenues. Les résultats sont indiqués dans le tableau suivant, comparativement au même cuir non traité.

| Caractéristiques | Veau tanné chrome | |
|---|---|---|
| | traité | non traité |
| Résistance à l'eau (RE) | 2 heures 30 min | inférieur à 5 secondes |
| Résistance à l'huile (RH) | supérieur à 8 h | inférieur à 5 secondes |

On prépare une nouvelle solution du télomère suivant l'invention par dilution de 4 parties de solution S1 jusqu'à 100 parties avec du n-heptane. Cette nouvelle solution est appliquée par pulvérisation sur cuir vachette tanné végétal à raison de 100 g/m$^2$ et on laisse sécher pendant 8 heures à la température ambiante, avant de procéder à l'examen des performances obtenues. Les résultats sont indiqués dans le tableau suivant, comparativement au même cuir non traité.

| Caractéristiques | Cuir vachette tanné végétal | |
|---|---|---|
| | traité | non traité |
| Pouvoir répulsif vis-à-vis de l'eau (ST) | 100 | 0 |
| Pouvoir répulsif vis-à-vis de l'huile (OR) | 4 | 0 |
| Test hydrophobie (H) | 4 | 0 |

## EXEMPLE 2

**a) Préparation** :

On opère comme à l'exemple 1, mais en l'absence de monométhacrylate d'éthylèneglycol. Après dilution à 25 %, on obtient une solution (S2) d'un télomère selon l'invention. Cette solution contient 10,5 % de fluor.

**b) Application** :

4 parties de cette solution S2 sont diluées jusqu'à 100 parties avec du n-heptane, puis la solution diluée (S2d) est appliquée par foulardage sur un tissu de polyester (PE) et sur un tissu de polyamide (PA) avec des taux d'exprimage respectifs de 70 % et 65 %. On laisse ensuite sécher à température ambiante, puis on teste les tissus traités comparativement à des tissus non traités, avant et après un et trois lavages suivant la norme NF 607-136 6A. Les résultats obtenus sont indiqués dans le tableau suivant.

| Pouvoir répulsifs vis-à-vis de l'eau (ST) | | | | | | |
|---|---|---|---|---|---|---|
| Tissu | 0 lavage | | 1 lavage | | 3 lavages | |
| | PE | PA | PE | PA | PE | PA |
| Non traité | 0 | 0 | 0 | 0 | 0 | 0 |
| traité | 100 | 100 | 100 | 90 | 90 | 90 |

On applique la même solution diluée S2d sur vachette tannée au chrome par pulvérisation à raison de 200 g/m$^2$, puis on laisse sécher pendant 8 heures à température ambiante avant de comparer les performances obtenues à celles d'un cuir non traité. Les résultats sont indiqués dans le tableau suivant.

| Caractéristiques | Vachette tannée chrome traité | non traité |
|---|---|---|
| Résistance à l'eau (RE) | supérieur à 9 h | inférieur à 5 secondes |
| Résistance à l'huile (RH) | supérieur à 9 h | inférieur à 5 secondes |
| Hydrophobie (H) | 10 | 0 |
| Pouvoir répulsif vis-à-vis de l'huile (OR) | 4 | 0 |

## EXEMPLE 3

### a) Préparation :

Dans un réacteur identique à celui de l'exemple 1, on charge successivement 41,3 parties de n-heptane, 13,9 parties d'acétate de butyle, 6 parties d'un mélange de thiols de formule générale :

$$CF_3\text{-}(CF_2)_m\text{-}C_2H_4\text{-}SH \qquad (XVII)$$

ayant la composition suivante :

| | | | | | | |
|---|---|---|---|---|---|---|
| m : | 5 | 7 | 9 | 11 | 13 | 15 |
| % : | 58 | 24 | 12 | 3 | 2 | 1 |

5,6 parties du même mélange de monomères polyfluorés qu'à l'exemple 1, 10,5 parties de méthacrylate de stéaryle technique, 1,5 partie de N-vinyl-pyrrolidone-2 et 0,75 partie de méthacrylate de glycidyle.

On chasse l'air du réacteur par un courant d'azote anhydre, porte la solution à la température de 85°C et ajoute 0,2 partie de peroxyde de lauroyle et 0,06 partie de perpivalate de tertiobutyle, puis on coule goutte à goutte en une heure une solution de 13,8 parties de n-heptane, 4,6 parties d'acétate de butyle, 17,6 parties du même mélange de thiols $CF_3\text{-}(CF_2)_m\text{-}C_2H_4\text{-}SH$, 16,75 parties du même mélange de monomères polyfluorés qu'à l'exemple 1, 3,36 parties de méthacrylate de stéaryle technique, 0,5 partie de N-vinyl-pyrrolidone-2 et 2,25 parties de méthacrylate de glycidyle.

On maintient ensuite pendant 6 heures à 85°C en ajoutant toutes les 30 minutes 0,06 partie de perpivalate de tertiobutyle et toutes les 150 minutes 0,1 partie de peroxyde de lauroyle. A la fin de ce temps, l'analyse chromatographique (CPV) montre la disparition totale des thiols et des monomères. Après refroidissement à température ambiante, on obtient une solution jaune d'un télomère selon l'invention. Par étuvage pendant 2 heures à 130°C, on détermine son taux de matière non volatile, puis on l'ajuste à 25 % par addition d'un mélange 75/25 de n-heptane et d'acétate de butyle. On obtient alors une solution limpide jaune clair (S3) dont le taux de fluor est de 11,5 %.

### b) Application :

5 parties de cette solution S3 sont diluées jusqu'à 100 parties avec un mélange 70/15/15 de n-heptane/acétate de butyle/isopropanol. La nouvelle solution obtenue est alors appliquée par pulvérisation sur un cuir de veau tanné au chrome, à raison de 200 g/m², puis on laisse sécher pendant 8 heures à la température ambiante avant de procéder à l'examen des performances. Les résultats obtenus sont indiqués dans le tableau suivant comparativement au même cuir non traité.

| Caractéristiques | Veau tanné chrome traité | Veau tanné chrome non traité |
|---|---|---|
| Résistance à l'eau (RE) | 7 heures 30 min | inférieur à 5 secondes |
| Résistance à l'huile (RH) | 30 minutes | inférieur à 5 secondes |
| Pouvoir répulsif vis-à-vis de l'huile (OR) | 1 | 0 |
| Hydrophobie (H) | 3 | 0 |

## EXEMPLE 4

**a) Préparation** :

Dans un réacteur identique à celui de l'exemple 1, on charge 13,3 parties de n-heptane, 40 parties d'acétate d'éthyle, 2 parties d'acétone, 1,6 parties du thiol $C_6F_{13}$-$C_2H_4$-SH, 8 parties d'un mélange de monomères polyfluorés de formule générale :

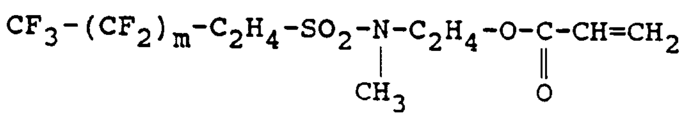

(XVIII)

ayant la composition suivante :

| | | | | | | |
|---|---|---|---|---|---|---|
| m : | 5 | 7 | 9 | 11 | 13 | 15 |
| % : | 58 | 24 | 12 | 3 | 2 | 1 |

puis 6,5 parties de méthacrylate de nonyle et 0,5 partie de méthacrylate de glycidyle.

On chasse l'air du réacteur par un courant d'azote anhydre, porte la solution à reflux (soit 65°C) et ajoute 0,2 partie d'azo-2,2' isobutyronitrile (AIBN) et 0,06 partie de perpivalate de tertiobutyle, puis on coule goutte à goutte en une heure une solution de 3 parties de n-heptane, 9,3 parties d'acétate d'éthyle, 6 parties d'acétone, 4,8 parties de thiol $C_6F_{13}C_2H_4SH$, 24 parties du même mélange de monomères polyfluorés que précédemment, 2,4 parties de méthacrylate de nonyle et 1,4 partie de méthacrylate de glycidyle.

On maintient ensuite au reflux pendant 6 heures en ajoutant toutes les 30 minutes 0,06 partie de perpivalate de tertiobutyle et toutes les 150 minutes 0,1 partie d'AIBN. A la fin de ce temps, l'analyse chromatographique (CPV) montre la disparition totale du thiol et des monomères. Après refroidissement à température ambiante, on obtient une solution brunâtre d'un télomère selon l'invention. Par étuvage pendant 2 heures à 120°C, on détermine son taux de matière non volatile, puis on l'ajuste à 25 % par addition d'un mélange 25/75 de n-heptane et d'acétate d'éthyle. On obtient alors une solution limpide ocre pâle (S4) dont le taux de fluor est de 10 %.

**b) Application** :

4 parties de cette solution S4 sont diluées jusqu'à 100 parties avec un mélange 85/15 de n-heptane et

d'isopropanol. La nouvelle solution ainsi obtenue est alors appliquée par pulvérisation sur un cuir de veau tanné chrome, à raison de 200 g/m$^2$, et on laisse sécher pendant 8 heures à la température ambiante avant de procéder à l'examen des performances. Les résultats obtenus sont indiqués dans le tableau suivant comparativement au même cuir non traité.

| Caractéristiques | Veau tanné chrome traité | Veau tanné chrome non traité |
|---|---|---|
| Résistance à l'eau (RE) | supérieur à 9 h | inférieur à 5 secondes |
| Résistance à l'huile (RH) | supérieur à 9 h | inférieur à 5 secondes |
| Pouvoir répulsif vis-à-vis de l'huile (OR) | 4 | 0 |
| Hydrophobie (H) | 6 | 0 |

## EXEMPLE 5

a) **Préparation** :

Dans un réacteur identique à celui de l'exemple 1, on charge 18,4 parties de n-heptane, 18,4 parties d'acétate d'éthyle, 18,4 parties de méthylisobutylcétone, 2 parties de thiol $C_8F_{17}$-$C_2H_4$-SH, 3,1 parties d'un mélange de monomères polyfluorés de formule générale :

$$CF_3-(CF_2)_m-C_2H_4-O-\underset{\underset{O}{\|}}{C}-CH=CH_2 \qquad (XIX)$$

ayant la composition suivante :

| | | | | | | |
|---|---|---|---|---|---|---|
| m : | 5 | 7 | 9 | 11 | 13 | 15 |
| % : | 58 | 24 | 12 | 3 | 2 | 1 |

puis 12,5 parties de méthacrylate de lauryle technique (mélange contenant environ 65 % d'ester en $C_{12}$ et 35 % d'ester en $C_{14}$), 0,75 partie de méthacrylate de glycidyle et 3 parties d'acétate de vinyle.

On chasse l'air du réacteur par un courant d'azote anhydre, porte la solution à reflux (soit 77°C) et ajoute 0,2 partie de peroxyde de lauroyle et 0,06 partie de perpivalate de tertiobutyle, puis on coule goutte à goutte en une heure une solution de 6,1 parties de n-heptane, 6,1 parties d'acétate d'éthyle, 6,1 parties de méthylisobutylcétone, 4 parties de thiol $C_8F_{17}C_2H_4SH$, 9,2 parties du même mélange de monomères polyfluorés que précédemment, 12,5 parties de méthacrylate de lauryle technique, 1 partie d'acétate de vinyle et 2,25 parties de méthacrylate de glycidyle.

On maintient ensuite au reflux pendant 6 heures en ajoutant toutes les 30 minutes 0,06 partie de perpivalate de tertiobutyle et toutes les 150 minutes 0,1 partie de peroxyde de lauroyle. A la fin de ce temps, l'analyse chromatographique (CPV) montre la disparition totale du thiol et des monomères. Après refroidissement

à température ambiante, on obtient une solution blanche limpide d'un télomère selon l'invention. Par étuvage pendant 2 heures à 120°C, on détermine son taux de matière non volatile, puis on l'ajuste à 25 % par addition d'un mélange en proportions égales de n-heptane, d'acétate d'éthyle et de méthylisobutylcétone. On obtient une solution limpide (S5) dont le taux de fluor est de 5,5 %.

b) Application :

8 parties de cette solution S5 sont diluées jusqu'à 100 parties avec un mélange 75/25 de n-heptane et d'isopropanol. La solution diluée ainsi obtenue est alors appliquée par pulvérisation sur un cuir de veau tanné au chrome, à raison de 200 g/m$^2$, puis on laisse sécher pendant 8 heures à la température ambiante avant de procéder à l'examen des performances. Les résultats obtenus sont indiqués dans le tableau suivant comparativement au même cuir non traité.

| Caractéristiques | Veau tanné chrome | |
|---|---|---|
| | traité | non traité |
| Résistance à l'eau (RE) | 60 minutes | inférieur à 5 secondes |
| Résistance à l'huile (RH) | 10 minutes | inférieur à 5 secondes |

## EXEMPLE 6

a) Préparation :

Dans un réacteur identique à celui de l'exemple 1, on charge 58,1 parties de n-heptane, 19,4 parties d'acétate d'éthyle, 0,3 partie de thiol $C_6F_{13}$-$C_2H_4$-SH, 6 parties du même mélange de monomères polyfluorés qu'à l'exemple 1, puis 11,1 parties de méthacrylate de stéaryle technique, 0,5 partie de méthacrylate d'hydroxy-2 chloro-3 propyle et 0,9 parties de méthacrylate de glycidyle.

On chasse l'air du réacteur par un courant d'azote anhydre, porte la solution à reflux (soit 77°C) et ajoute 0,3 partie d'azo-2,2' isobutyronitrile (AIBN), puis on coule goutte à goutte en une heure une solution de 19,3 parties de n-heptane, 6,5 parties d'acétate d'éthyle, 0,8 partie de thiol $C_6F_{13}C_2H_4SH$, 17,8 parties du même mélange de monomères polyfluorés qu'à l'exemple 1, 3,7 parties de méthacrylate de stéaryle technique, 1,5 partie de méthacrylate d'hydroxy-2 chloro-3 propyle et 2,3 parties de méthacrylate de glycidyle.

On maintient ensuite au reflux pendant 6 heures en ajoutant toutes les 60 minutes 0,15 partie d'AIBN. A la fin de ce temps, l'analyse chromatographique (CPV) montre la disparition totale du thiol et des monomères. Après refroidissement à température ambiante, on obtient une solution jaune limpide d'un télomère selon l'invention. Par étuvage pendant 2 heures à 120°C, on détermine son taux de matière non volatile, puis on l'ajuste à 25 % par addition d'un mélange 75/25 de n-heptane et d'acétate d'éthyle. On obtient alors une solution limpide jaune clair (S6) dont le taux de fluor est de 8,5 %.

b) Application :

6 parties de cette solution S6 sont diluées jusqu'à 100 parties avec un mélange 50/50 de n-heptane et d'isopropanol. La solution diluée est ensuite appliquée par pulvérisation sur un cuir de veau tanné au chrome, à raison de 200 g/m$^2$, puis on laisse sécher pendant 8 heures à la température ambiante avant de procéder à l'examen des performances. Les résultats obtenus sont indiqués dans le tableau suivant comparativement au même cuir non traité.

| Caractéristiques | Veau tanné chrome | |
|---|---|---|
| | traité | non traité |
| Résistance à l'eau (RE) | supérieur à 9 h | inférieur à 5 secondes |
| Résistance à l'huile (RH) | supérieur à 9 h | inférieur à 5 secondes |
| Pouvoir répulsif vis-à-vis de l'huile (OR) | 4 | 0 |
| Hydrophobie (H) | 9 | 0 |

## EXEMPLE 7

**a) Préparation** :

Dans un réacteur identique à celui de l'exemple 1, on charge 41,25 parties de n-heptane, 13,9 parties d'acétate d'éthyle, 2,5 parties de thiol $C_8F_{17}$-$C_2H_4$-SH, 5,6 parties du même mélange de monomères polyfluorés qu'à l'exemple 1, puis 1,64 parties de styrène.

On chasse l'air du réacteur par un courant d'azote anhydre, porte la solution à reflux (soit 77°C) et ajoute 0,2 partie de peroxyde de lauroyle et 0,06 partie de perpivalate de tertiobutyle, puis on coule goutte à goutte en une heure une solution de 13,75 parties de n-heptane, 4,6 parties d'acétate d'éthyle, 7,5 parties de thiol $C_8F_{17}$-$C_2H_4$-SH, 16,75 parties du même mélange de monomères polyfluorés qu'à l'exemple 1 et 4,9 parties de styrène.

On maintient ensuite au reflux pendant 6 heures en ajoutant toutes les 30 minutes 0,06 partie de perpivalate de tertiobutyle et toutes les 150 minutes 0,1 partie de peroxyde de lauroyle. A la fin de ce temps, l'analyse chromatographique (CPV) montre la disparition totale du thiol et des monomères. Après refroidissement à température ambiante, on obtient une solution blanche limpide d'un télomère selon l'invention. Par étuvage pendant 2 heures à 120°C, on détermine son taux de matière non volatile, puis on l'ajuste à 25 % par addition d'un mélange 75/25 de n-heptane et d'acétate d'éthyle. On obtient une solution limpide (S7) dont le taux de fluor est de 13,3 %.

**b) Application** :

3 parties de cette solution S7 sont diluées jusqu'à 100 parties avec un mélange 60/20/15 de n-heptane/acétate de butyle/isopropanol. La solution diluée ainsi obtenue est alors appliquée par pulvérisation sur un cuir de veau tanné au chrome, à raison de 200 g/m$^2$, puis on laisse sécher pendant 8 heures à la température ambiante avant de procéder à l'examen des performances. Les résultats obtenus sont indiqués dans le tableau suivant comparativement au même cuir non traité.

| Caractéristiques | Veau tanné chrome | |
|---|---|---|
| | traité | non traité |
| Résistance à l'eau (RE) | 3 heures | inférieur à 5 secondes |
| Résistance à l'huile (RH) | 1 heure 30 mn | inférieur à 5 secondes |
| Pouvoir répulsif vis-à-vis de l'huile (OR) | 1 | 0 |
| Hydrophobie (H) | 3 | 0 |

## EXEMPLE 8

**a) Préparation** :

Dans un réacteur identique à celui de l'exemple 1, on charge 41,25 parties de n-heptane, 13,9 parties d'acétate d'éthyle, 2,5 parties de thiol $C_8F_{17}$-$C_2H_4$-SH, 5,6 parties du même mélange de monomères polyfluorés qu'à l'exemple 1.

On chasse l'air du réacteur par un courant d'azote anhydre, porte la solution à reflux (soit 77°C) et ajoute 0,1 partie d'AIBN, 0,1 partie de peroxyde de lauroyle et 0,06 partie de perpivalate de tertiobutyle, puis on coule goutte à goutte en une heure une solution de 13,75 parties de n-heptane, 4,6 parties d'acétate d'éthyle, 7,5 partie de thiol $C_8F_{17}$-$C_2H_4$-SH, et 16,75 parties du même mélange de monomères polyfluorés qu'à l'exemple 1.

On maintient ensuite au reflux pendant 6 heures en ajoutant toutes les 30 minutes 0,06 partie de perpivalate de tertiobutyle et toutes les 150 minutes 0,05 partie de peroxyde de lauroyle et 0,05 partie d'AIBN. A la fin de ce temps, l'analyse chromatographique (CPV) montre la disparition totale du thiol et des monomères. Après refroidissement à température ambiante, on obtient une solution blanche limpide d'un télomère selon l'invention. Par étuvage pendant 2 heures à 120°C, on détermine son taux de matière non volatile, puis on l'ajuste à 19 % par addition d'un mélange 75/25 de n-heptane et d'acétate d'éthyle. On obtient alors une solution limpide (S8) dont le taux de fluor est de 12,1 %.

**b) Application** :

3,5 parties de cette solution S8 sont diluées jusqu'à 100 parties avec un mélange 65/20/15 de n-heptane/acétate de butyle/isopropanol. La solution diluée est ensuite appliquée par pulvérisation sur un cuir de veau tanné au chrome, à raison de 200 g/m$^2$, puis on laisse sécher pendant 8 heures à la température ambiante avant de procéder à l'examen des performances. Les résultats obtenus sont indiqués dans le tableau suivant comparativement au même cuir non traité.

| Caractéristiques | Veau tanné chrome | |
|---|---|---|
| | traité | non traité |
| Résistance à l'eau (RE) | 2 heures | inférieur à 5 secondes |
| Résistance à l'huile (RH) | 1 heure | inférieur à 5 secondes |
| Pouvoir répulsif vis-à-vis de l'huile (OR) | 1 | 0 |
| Hydrophobie (H) | 2 | 0 |

## Revendications

1. Télomères acryliques fluorés, caractérisés en ce qu'ils contiennent en poids, sous forme télomérisée :
   **(a)** 2 à 40 % d'un ou plusieurs thiols fluorés de formule générale :
   $$R_F\text{-B-SH} \qquad (I)$$
   dans laquelle $R_F$ représente un radical perfluoroalkyle à chaîne droite ou ramifiée, contenant de 2 à 20 atomes de carbone et B représente un radical alkylène contenant 1 à 4 atomes de carbone ;
   **(b)** 20 à 70 % d'un ou plusieurs monomères polyfluorés de formule générale :

   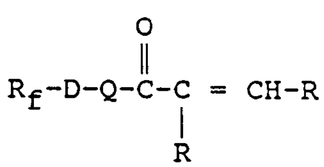

   (II)

   dans laquelle $R_f$ représente un radical perfluoroalkyle à chaîne droite ou ramifiée, contenant 2 à 20 atomes de carbone, Q représente un atome d'oxygène ou de soufre, D représente un enchaînement bivalent lié à Q par un carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ; et
   **(c)** 0 à 65 % d'un ou plusieurs monomères quelconques, autres que ceux définis sous (b).

2. Télomères selon la revendication 1, dans lesquels la teneur en thiol(s) fluoré(s) de formule (I) est comprise entre 10 et 30 %.

3. Télomères selon la revendication 1 ou 2, dans lesquels la teneur en monomère(s) polyfluoré(s) de formule (II) est comprise entre 30 et 50 %.

4. Télomères selon l'une des revendications 1 à 3, dans lesquels la teneur en monomère(s) autres que ceux de formule (II) est comprise entre 25 et 50 %.

5. Télomères selon l'une des revendications 1 à 4, dans lesquels les radicaux perfluoroalkyle $R_F$ et $R_f$, identiques ou différents, contiennent de 4 à 16 atomes de carbone.

6. Télomères selon l'une des revendications 1 à 5, dans lesquels B est un radical alkylène linéaire, de préférence le radical éthylène ou tétraméthylène.

7. Télomères selon l'une des revendications 1 à 6, dans lesquels Q est un atome d'oxygène et D un radical alkylène linéaire contenant de 1 à 20 atomes de carbone, de préférence le radical éthylène ou tétraméthylène.

8. Télomères selon l'une des revendications 1 à 7, dans lesquels le monomère (c) ou l'un au moins des monomères (c) est un acrylate ou méthacrylate d'alkyle à chaîne linéaire, ramifiée ou cyclique contenant de 1 à 18 atomes de carbone, de préférence au moins 6.

9. Application des télomères selon l'une des revendications 1 à 8 à l'oléofugation et à l'hydrofugation de substrats divers, en particulier des cuirs.

10. Matériaux et articles traités au moyen d'un télomère selon l'une des revendications 1 à 8.

## Patentansprüche

1. Fluorierte Acryltelomere, dadurch gekennzeichnet, daß sie in Gew.-% und in telomerisierter Form enthalten:

   (a) 2 bis 40 Gew.-% mindestens eines fluorierten Mercaptans der allgemeinen Formel:

   $$R_F\text{-}B\text{-}SH \qquad (I)$$

   in der $R_F$ einen Perfluoroalkylrest mit einer linearen oder verzweigten Kette aus 2 bis 20 Kohlenstoffatomen und B einen Alkylenrest mit 1 bis 4 Kohlenstoffatomen darstellt;

   (b) 20 bis 70 Gew.-% mindestens eines polyfluorierten Monomers der allgemeinen Formel:

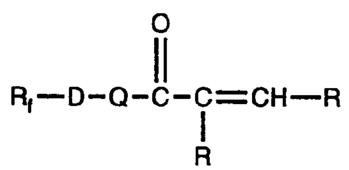

(II)

   in der $R_f$ einen Perfluoroalkylrest mit einer linearen oder verzweigten Kette aus 2 bis 20 Kohlenstoffatomen darstellt, Q ein Sauerstoff- oder Schwefelatom darstellt, D einen mittels eines Kohlenstoffatoms mit Q verbundenen zweiwertigen Rest darstellt und ein oder mehrere Sauerstoff-, Schwefel- und/oder Stickstoffatome enthalten kann; und einer der Reste R ein Wasserstoffatom darstellt und der andere ein Wasserstoffatom oder einen Alkylrest mit 1 bis 4 Kohlenstoffatomen darstellt; und

   (c) 0 bis 65 Gew.-% mindestens eines beliebigen Monomers enthält, das nicht unter (b) beschrieben ist.

2. Telomere nach Anspruch 1, in denen der Gehalt an fluorierten Mercaptanen nach der Formel (I) zwischen 10 und 30 Gew.-% liegt.

3. Telomere nach Anspruch 1 oder 2, in denen der Gehalt an polyfluorierten Monomeren nach der Formel (II) zwischen 30 und 50 Gew.-% liegt.

4. Telomere nach einem der Ansprüche 1 bis 3, in denen der Gehalt an Monomeren, die nicht mit der Formel (II) beschrieben sind, zwischen 25 und 50 Gew.-% liegt.

5. Telomere nach einem der Ansprüche 1 bis 4, in denen die Perfluoroalkylreste $R_F$ und $R_f$, gleich oder verschieden, 4 bis 16 Kohlenstoffatome enthalten.

6. Telomere nach einem der Ansprüche 1 bis 5, in denen B ein linearer Alkylenrest, vorzugsweise ein Ethylen- oder Tetramethylenrest, ist.

7. Telomere nach einem der Ansprüche 1 bis 6, in denen Q ein Sauerstoffatom und D ein linearer Alkylenrest

mit 1 bis 20 Kohlenstoff- atomen, vorzugsweise ein Ethylen- oder Tetramethylenrest, ist.

8. Telomere nach einem der Ansprüche 1 bis 7, in denen mindestens ein Monomer (c) ein Alkylacrylat oder -methacrylat mit einer linearen, verzweigten oder cyclischen Kette aus 1 bis 18, vorzugsweise 6 Kohlenstoffatomen darstellt.

9. Anwendung der Telomere nach einem der Ansprüche 1 bis 8 zum Wasser- und Ölabweisendmachen verschiedener Substrate, insbesondere von Leder.

10. Materialien und Artikel, mit einem Telomer nach einem der Ansprüche 1 bis 8 behandelt.

## Claims

1. Fluoroacrylic telomers, characterized in that they contain by weight, in the telomerized form:
(a) 2 to 40% of one or a number of fluorinated thiols of general formula:

$$R_F\text{-}B\text{-}SH \qquad (I)$$

in which $R_F$ represents a straight- or branched-chain perfluoroalkyl radical containing from 2 to 20 carbon atoms and B represents an alkylene radical containing 1 to 4 carbon atoms;
(b) 20 to 70% of one or a number of polyfluorinated monomers of general formula:

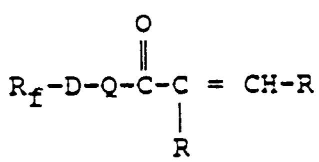

(II)

in which $R_f$ represents a straight- or branched-chain perfluoroalkyl radical containing 2 to 20 carbon atoms, Q represents an oxygen or sulphur atom, D represents a divalent linkage bonded to Q via a carbon and which can contain one or a number of oxygen, sulphur and/or nitrogen atoms, one of the R symbols represents a hydrogen atom and the other a hydrogen atom or an alkyl radical containing 1 to 4 carbon atoms; and
(c) 0 to 65% of one or a number of monomers which can be of any kind other than those defined under (b).

2. Telomers according to Claim 1, in which the content of fluorinated thiol(s) of formula (I) is between 10 and 30%.

3. Telomers according to Claim 1 or 2, in which the content of polyfluorinated monomer(s) of formula (II) is between 30 and 50%.

4. Telomers according to one of Claims 1 to 3, in which the content of monomer(s) other than those of formula (II) is between 25 and 50%.

5. Telomers according to one of Claims 1 to 4, in which the perfluoroalkyl radicals $R_F$ and $R_f$, which are identical or different, contain from 4 to 16 carbon atoms.

6. Telomers according to one of Claims 1 to 5, in which B is a linear alkylene radical, preferably the ethylene or tetramethylene radical.

7. Telomers according to one of Claims 1 to 6, in which Q is an oxygen atom and D a linear alkylene radical containing from 1 to 20 carbon atoms, preferably the ethylene or tetramethylene radical.

8. Telomers according to one of Claims 1 to 7 in which the monomer (c) or at least one of the monomers (c) is a linear- or branched-chain or cyclic alkyl acrylate or methacrylate containing from 1 to 18, preferably at least 6, carbon atoms.

9. Application of the telomers according to one of Claims 1 to 8 to making various substrates, in particular leathers, oil-repellent and water-repellent.

10. Materials and articles treated by means of a telomer according to one of Claims 1 to 8.